# EUROPEAN PATENT SPECIFICATION

(11) **EP 0 569 510 B1**
(45) Date of publication and mention of the grant of the patent: **09.07.1997**
(21) Application number: 92905669.5
(22) Date of filing: 28.01.1992
(51) Int. Cl.: D04H 3/08, F16D 69/00, B29C 70/00

(54) **METHOD OF MAKING PULTRUDED BRAKE LININGS**
VERFAHREN ZUR HERSTELLUNG VON BREMSBELÄGEN NACH DEM STRANGPRESSVERFAHREN
PROCEDE DE PRODUCTION POUR GARNITURES DE FREIN EXTRUDEES PAR ETIRAGE

(30) Priority: 29.01.1991 US 647137
(43) Date of publication of application: 18.11.1993
(73) Proprietor: Booher, Benjamin V., Scottsdale,AZ 85258 (US)
(72) Inventor: Booher, Benjamin V., Scottsdale,AZ 85258 (US)
(74) Representative: Spall, Christopher John
(86) International application number: PCT/US92/00665
(87) International publication number: WO 92/13128

(56) References cited:
- US-A- 4 119 591
- US-A- 4 244 944
- US-A- 4 244 994
- US-A- 4 259 397
- US-A- 4 432 922
- US-A- 4 445 957
- US-A- 4 728 552
- US-A- 4 892 600
- US-A- 5 026 447

## Description

### Technical Field

The present invention relates to brake pads and linings and pertains particularly to an improved method and composition for making same.

### Background Art

A friction brake is basically a pair of friction elements, one rotating and one stationary, brought into engagement to produce a friction force measured as brake torque for either slowing or stopping the rotating element. Brakes are designed so that the brake torque is somewhat proportional to the input force used to engage the elements. Unfortunately, pressure is not the only factor that influences the frictional response of the brake elements. Friction effects between friction elements cause friction force and brake torque to vary with engaging pressure, speed, and temperature, and to depend upon deposited interfacial film for stability.

The rotating element of a brake system is usually a steel disc or drum, and the stationary element is usually a composition pad or shoe lining. The materials forming the composition element are the unpredictable variables that have the greatest affect on the performance characteristics of the brake system.

Until recent years, the predominant material used in the manufacture of friction pads and discs for brakes, clutches and the like was asbestos. However, it was discovered that asbestos is a carcinogenic substance, and that such use released potentially harmful amounts of it into the environment. Extensive efforts have been put forth in an effort to find suitable environmentally safe materials having the desirable wear and heat resistant characteristics as asbestos.

Attempts to satisfy the need for long life, high friction heat resistant friction materials have included proposals to utilize various chopped fibers molded in a bonding matrix, such as a resin. The friction unit is formed by a molding process, with the fibers randomly oriented and placed in a binder, such as either a dry powder resin cured under heat and pressure, or placed in a liquid resin and cured.

However, friction units made by this method are expensive to manufacture and have not been satisfactory, because of their lack of uniformity in performance and durability. For example, units from the same batch may vary as much as 35% in performance characteristics. Thus, seemingly identical brake pads or shoes may vary as much as 35% in performance. The non-uniformity of results has been found to be caused largely by a non-uniformity of distribution and orientation of the fibers in the matrix. This not only creates expensive inspection and quality control problems, it can also create maintenance problems, and sometimes even hazardous conditions. For example, pads that have been matched for performance at initial installation may vary over their useful life.

US 4 119 591 discloses a material which overcomes the problems of asbestos friction pads mentioned above. A specific composition is disclosed which gives a uniform wear rate up to 315.56°C (600°F). However, the material disclosed cannot be manufactured by the method of the present application.

US 4 244 994 discloses a friction member which can withstand temperatures of up to 454.44°C (850°F) in which non-aramid fibres are impregnated with heat curable cement. Two preforms are subjected to heat and pressure to form the friction member. Again the member disclosed is not suitable for manufacture by the method of the present application.

In my aforementioned application, I disclosed an improvised method and composition for brake pads and linings. However, further improvements in both methods and compositions are desirable and have been developed as set forth herein.

### Disclosure of the Invention

It is the primary object of the present invention to provide improved compositions for brake pads and linings and method of making same.

In accordance with a primary aspect of the present invention, a continuous process for the manufacture of friction units comprising the steps of: selecting a substantially uniform array of strands of reinforcing fibers; wetting said array of strands of reinforcing fibers with a resin material; pulling said wetted strands of reinforcing fibers in a predetermined density and a uniform orientation through a composite forming die for forming a body having a peripheral configuration of said friction units; solidifying said body by at least partially curing said resin material; and selectively cutting said body transverse to said strands into a plurality of said friction units, thereby forming a plurality of friction units having a predetermined distribution and orientation of fibers.

In accordance with another aspect of the invention, strands of reinforcing fibers are selectively oriented in molds and molded with compositions of phenolic resins.

### Brief Description of Drawings

The above and other objects and advantages of the present invention will become apparent from the following description when read in conjunction with the accompanying drawings wherein:
Fig. 1 is a perspective view schematically illustrating an apparatus and a preferred method of carrying out the invention;
Fig. 2 is a detailed sectional view of a brake pad in accordance with the invention; and
Fig. 3 is a perspective view of a brake shoe lining in a drum type brake in accordance with the invention.

### Best Mode for Carrying Out the Invention

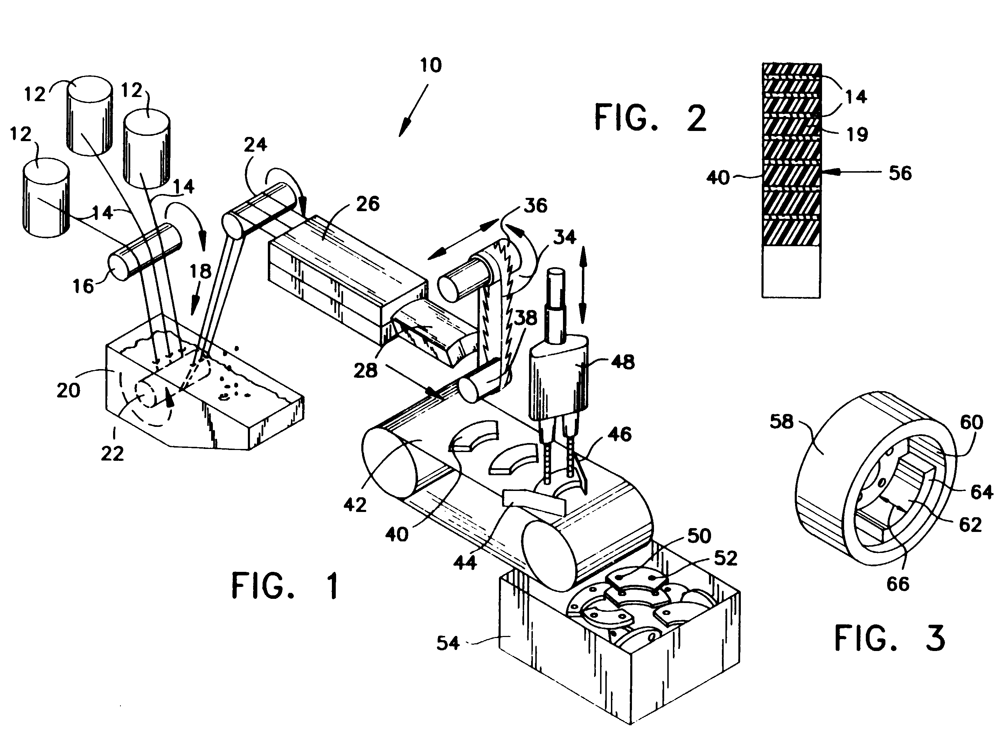

Referring to Fig. 1 of the drawing, there is schematically illustrated an exemplary system for carrying out the process of the invention for making brake friction units in accordance with the invention. The system, designated generally by the numeral 10, comprises a plurality of creels 12 from which a plurality of strands 14 of an elongated continuous fiber are drawn and passed across suitable guide rollers or bars 16 to a thermoplastic bath 18. The fibers or strands 16 pass through the bath into or through a bath of a suitable resin contained within a reservoir 20 for impregnating the fibers or strands. The strands 14 are guided beneath suitable guide roller or means 22 and over the guide roller 24 and into a die 26 for imparting at least a part of the shape or configuration of the friction units.

The strands, particularly fiberglass may require a sizing treatment, i.e. application of a compound or chemical to insure a good bond between the fibers and matrix. A bulked roving (bunch of strands or fibers) may be used. Bulked roving is produced by a process in which a standard roving is fractured or splintered by forced cold air. This provides two useful properties, 1) increased diameter which assists in providing fill to low glass content pultrusion, and 2) the "splinters" provide for good mechanical bonding with the resin matrix. More general, traditional rovings of properly size fibers is utilized.

The impregnated strands are passed through the die 26, where they are shaped into part of the desired configuration and at least partially cured. They emerge from the die in the form of a bar or block 28 having at least part of the peripheral configuration of the brake pad or other article being manufactured. The bar or block 28 is forced or pulled from the die 26 by suitable means, such as hydraulic pullers or the like, and positioned to be cut into individual brake pad units or pieces in the illustrated embodiment.

In the illustrated embodiment, a suitable cutting apparatus, such as a band saw 34 supported on its pulleys or rollers 36 and 38, is movable transverse to the axis or movement of the bar 28 for sawing the bar into a plurality of brake pads 40. Other suitable cutting apparatus may be utilized, such as water jets, laser, abrasive or other means. The cut surface represents the friction surface in this embodiment, and the fibers are preferably substantially normal or perpendicular to this surface. It may be desirable in some instances to provide a different angularity to the fibers in relation to the friction surface. This can be accomplished by cutting the friction units from the bar at the desired angle to the axis thereof.

The brake pads, upon being cut from the bar, fall onto a conveyer belt 42 and are moved into position held by a jig or fixture 44, 46 for operation of a punch or drill press 48 for forming mounting holes 50 and 52 on the brake pads. The pads are then accumulated in a suitable storage container or bin 54, where they are then packaged and shipped. This provides a highly efficient and economical manufacturing process. In the case of bonded type pads, the drill and punch operation may be eliminated from the process.

The reinforcing fibers 14 for the brake pads or linings are preferably glass fiber, but may contain other materials and fibers or combinations thereof. In addition, other fibers may be woven or distributed in with the glass fibers in various selected distributions and proportions. For example, various fibers may be distributed in various concentrations throughout the unit for optimizing various parameters such as wear, fade, and cooling.

Many different fibers or strands and combinations may be utilized, including but not limited to glass, rock, ceramic, carbon, graphite, aramide, nomex, and fibers of other organic and inorganic materials. Various metallic fibers, such as copper and aluminum, may also be utilized in various proportions with non-metallic fibers.

The manufacturing system and process, as illustrated, provides for the controlled orientation of the fibers, as well as the controlled uniformity and density of the fibers within the resin matrix. For example, the composition of the friction device determines many of its characteristics, such as its durability, heat resistance, and friction resistance. With this process, the fibers may be controllably oriented uniformly at any suitable angle to the friction surface of the brake pad or friction device. Thus, the process and materials have the capability of providing superior, predictable and consistent performance.

The matrix material may be any suitable resin that is either a thermoplastic material or non-thermoplastic material, and it may require various forms of curing. It may be cured for example by cooling, or by the use of UV or other radiation or the like.

I have found a preferred material to be certain phenolic resins which are not thermoplastic. These have been found to have many desired characteristics for this manufacturing process and application. For example, one preferred phenolic resin is available from BP Chemicals under the trademark CELLOBOND and product designation J2041L. It is described as a high viscosity phenolic for use in heat cured pultrusion and press molding. It does not require any catalyst and will provide reasonably fast line speeds and cure cycles. This provides enhanced efficiency in production.

The matrix material will be formulated to include heat dissipation and/or friction modifiers, such as graphite and or non-ferrous metallic powders. For example, from about one to ten percent by weight of graphite powder and/or one or more non-ferrous metallic powders may be incorporated into the matrix material.

The glass or fiber to resin matrix may vary from about one part glass or fiber to two part resin, up to about three part fiber to one part resin. A preferred glass to matrix composition is from about 40 to 60% glass to 60 to 40% resin or matrix mix. The matrix preferably has from 5 to 10% by weight of one or more of graphite powder, copper powder and aluminum powder. In addition, aramide pulp and other synthetic fiber pulps may be added or distributed throughout the matrix material.

Certain thermoplastic materials may be desirable for other specific applications. The thermoplastic material may, for example, be a suitable polyester and may also have components such as powders of graphite or other material to aid in friction control and the dissipation of heat. For example, a one to about ten percent by weight of graphite powder uniformly distributed through the thermoplastic material aids in the dissipation of heat. Alternate compositions may include small amounts of other materials, such as non-ferrous metallic powders, such as copper, aluminum or the like. For example, a one to ten percent by weight copper powder may also be utilized to enhance the dissipation of heat.

I have discovered that various proportions and compositions of materials can affect the performance characteristics of the brake pad and liner units. For example, the following ranges examples have been constructed and tested:

Glass content about 37 to 51% by volume (about 55 to 68% by weight), with a matrix of resin containing about 5 to 10% by weight of fine graphite and copper powder.

The best results were obtained from compositions within the range of from about 58 to about 59% by weight (41% volume) fiberglass in a matrix of phenolic resin, with about 5 to 10% by weight copper, and 5 to 10% by weight graphite. These samples more closely followed the temperature performance of asbestos control samples.

Referring to Fig. 2, a section view through a brake pad 40 is illustrating glass fibers 14 in a matrix of thermoplastic material 19. The fibers 14 are shown substantially perpendicular to a friction surface 56 of the brake pad 40. Other friction devices, such as brake shoes and clutch pads, would preferably have similarly oriented strands or fibers. The density and mixture of fibers may be varied to suit the particular application.

While brake pads are illustrated in the process, it is apparent that clutch friction pads and brake shoe type of pads may also be manufactured by this process. The die is set to shape the emerging articles, such that the fibers are oriented uniformly at an angle preferably normal to the friction surface. However, in certain applications, an orientation parallel to the friction surface may be satisfactory or even preferred. For example, in a brake shoe and drum configuration as illustrated in Fig. 3, the fibers may preferably run parallel to the friction surface for ease of manufacturing. As illustrated, a typical brake drum 58 is illustrated having an inner friction surface 60 engaged by a brake shoe lining 62. The lining 62 is formed of fibers, the ends of which are shown at 64, with the fibers oriented parallel to the friction surfaces as indicated along arrow 66. This orientation of the fibers provides for an economical construction. Thin curved pultruded bars or slabs can be cut as in the Fig. 1 illustration to form the liner units.

The shoe linings may be formed by the pultrusion process in the form of a thin arcuate slab, and the linings cut to width as described above with respect to pads. This provides an economical technique for producing consistently uniform units. However, where orientation of the fibers normal to the friction is desired, a rectangular slab may be cut along an arc to form the curved friction surfaces.

The articles may be cut from the pultruded bar by any suitable means, such as by laser, water or other means. The present method and process provides a highly efficient manufacturing process for the production of high quality friction units that are asbestos free and/or a controlled uniform composition and quality. The pultrusion process enables the careful control of fiber density, mixture, and orientation on a continuous basis.

While the pultrusion process is preferred, the articles may also be made by other similar or derivative processes including: filament winding process. By this process, strands or filaments are wound on or into compression mold cavities supported on a drum or circular rim, forming slabs which can then be cut into the friction units. Another derivative process would involve the placement of pre-preg fibers (usually manufactured by the pultrusion or filament winding processes) into mold cavities. While this process is more costly and labor intensive, because pre-preg fibers would have uniform orientation, friction unit characteristics would be similar to more preferred process technologies.

## Claims

1. A continuous process for the manufacture of friction units (40) comprising the steps of:
selecting a substantially uniform array of strands of reinforcing fibers (14);
wetting said array of strands of reinforcing fibers (14) with a resin material, characterised by
pulling said wetted strands of reinforcing fibers (14) in a predetermined density and a uniform orientation through a composite forming die (26) for forming a body having a peripheral configuration of said friction units (40);
solidifying said body by at least partially curing said resin material; and
selectively cutting said body transverse to said strands into a plurality of said friction units (40), thereby forming a plurality of friction units (40) having a predetermined distribution and orientation of fibers (14).

2. A continuous process according to claim 1 characterised in that said reinforcing fibers (14) are a bulked roving of predominately fiberglass.

3. A continuous process according to claim 1 characterised in that said resin is a phenolic resin.

4. A continuous process according to claim 1 characterised in that the ratio of fibers (14) to resin is on the order of from about forty to sixty percent by weight.

5. A continuous process according to claim 1 characterised in that said reinforcing fibers (14) are uniformly oriented predominately normal to the friction surface.

6. A continuous process according to claim 3 characterised in that said phenolic resin forms a matrix having about five to ten percent by weight of graphite powder.

7. A continuous process according to claim 3 characterised in that said phenolic resin forms a matrix having about five to ten percent by weight of graphite powder and about five to ten percent by weight of copper powder.

8. A continuous process according to claim 1 characterised in that said friction unit is a brake pad having a friction surface and said fibers extend substantially normal to said surface.

9. A continuous process according to claim 1 characterised in that said friction unit (40) is a brake shoe lining having a friction surface and said fibers (14) extend substantially parallel to said surface.

10. A continuous process according to claim 1 characterised in that said friction unit (40) is a brake pad having a friction surface and said fibers (14) extend at a slight angle to said surface.

11. A continuous process according to claim 1 characterised in that said reinforcing fibers is taken from the group consisting essentially of glass, rock, ceramic, carbon, graphite, aramide, and NOMEX™.

## Patentansprüche

1. Kontinuierlicher Fertigungsprozeß für Reibungselemente (40), umfassend die Schritte:
Auswählen einer im wesentlichen gleichförmigen Gruppe von Litzen aus Verstärkungsfasern (14);
Befeuchten der Gruppe von Litzen aus Verstärkungsfasern (14) mit einem Harzmaterial, **gekennzeichnet durch**
Ziehen der angefeuchteten Litzen aus Verstärkungsfasern (14) in einer vorbestimmten Dichte und gleichmäßigen Orientierung durch eine zur Herstellung von Verbundstoff dienende Form (26), um einen Körper mit einer Umfangsgestalt der Reibungselemente (40) zu formen;
Verfestigen des Körpers durch zumindest teilweises Aushärten des Harzmaterials; und
Selektives Schneiden des Körpers quer zu den Litzen zu mehreren Reibungselementen (40), um dadurch eine Mehrzahl von Reibungselementen (40) zu bilden, die eine vorbestimmte Verteilung und Orientierung der Fasern (14) aufweisen.

2. Prozeß nach Anspruch 1, **dadurch gekennzeichnet,** daß die Verstärkungsfasern (14) ein Bausch-Roving aus vorherrschend Glasfaser sind.

3. Prozeß nach Anspruch 1, **dadurch gekennzeichnet,** daß das Harz ein Phenolharz ist.

4. Prozeß nach Anspruch 1, **dadurch gekennzeichnet**, daß das Verhältnis von Fasern (14) zu Harz in der Größenordnung von etwa vierzig zu sechzig Gew.-% liegt.

5. Prozeß nach Anspruch 1, **dadurch gekennzeichnet,** daß die Verstärkungsfasern (14) vornehmlich senkrecht zu der Reibungsfläche gleichmäßig orientiert sind.

6. Prozeß nach Anspruch 3, **dadurch gekennzeichnet,** daß das Phenolharz eine Matrix bildet, die etwa fünf bis zehn Gew.-% Graphitpulver aufweist.

7. Prozeß nach Anspruch 3, **dadurch gekennzeichnet**, daß das Phenolharz eine Matrix bildet, die etwa fünf bis zehn Gew.-% Graphitpulver und etwa fünf bis zehn Gew.-% Kupferpulver enthält.

8. Prozeß nach Anspruch 1, **dadurch gekennzeichnet,** daß das Reibungselement ein Bremsklotz mit einer Reibungsfläche ist, wobei sich die Fasern etwa senkrecht zu der Fläche erstrecken.

9. Prozeß nach Anspruch 1, **dadurch gekennzeichnet**, daß das Reibungselement (40) ein Bremsbackenbelag mit einer Reibungsfläche ist, wobei die Fasern (14) sich im wesentlichen parallel zu der Fläche erstrecken.

10. Prozeß nach Anspruch 1, **dadurch gekennzeichnet,** daß das Reibungselement (40) ein Bremsklotz mit einer Reibungsfläche ist, wobei die Fasern (14) sich unter einem kleinen Winkel bezüglich der Fläche erstrecken.

11. Prozeß nach Anspruch 1, **dadurch gekennzeichnet**, daß die Verstärkungsfasern aus einer Gruppe entnommen sind, die im wesentlichen aus Glas, Mineral, Keramik, Kohlenstoff, Graphit, Aramid und NOMEX® besteht.

## Revendications

1. Procédé en continu pour la fabrication d'unités de frottement (40) comprenant les étapes de:
sélection d'une série sensiblement uniforme de brins de fibres de renforcement (14);
humidification de ladite série de brins de fibres de renforcement (14) avec une matière résineuse,
caractérisé par
l'étirage desdits brins humidifiés de fibres de renforcement (14) en une densité prédéterminée et selon une orientation uniforme à travers une filière formatrice de composite (26) pour former un corps ayant la configuration périphérique desdites unités de frottement (40);
la solidification dudit corps par durcissement au moins partiel dudit matériau de résine; et
le découpage sélectif dudit corps transversalement par rapport auxdits brins en plusieurs desdites unités de frottement (40), formant ainsi plusieurs unités de frottement (40) ayant une répartition et une orientation de fibres (14) prédéterminées.

2. Procédé en continu selon la revendication 1 caractérisé en ce que lesdites fibres de renforcement (14) sont un roving gonflant constitué principalement de fibre de verre.

3. Procédé en continu selon la revendication 1 caractérisé en ce que ladite résine est une résine phénolique.

4. Procédé en continu selon la revendication 1 caractérisé en ce que le rapport des fibres (14) à la résine est de l'ordre d'environ quarante à soixante pour cent en poids.

5. Procédé en continu selon la revendication 1 caractérisé en ce que lesdites fibres de renforcement (14) sont uniformément orientées de manière principalement normale à la surface de frottement.

6. Procédé en continu selon la revendication 3 caractérisé en ce que ladite résine phénolique forme une matrice ayant d'environ cinq à dix pour cent en poids de poudre de graphite.

7. Procédé en continu selon la revendication 3 caractérisé en ce que ladite résine phénolique forme une matrice ayant d'environ cinq à dix pour cent en poids de poudre de graphite et d'environ cinq à dix pour cent en poids de poudre de cuivre.

8. Procédé en continu selon la revendication 1 caractérisé en ce que ladite unité de frottement est un patin de frein ayant une surface de frottement et en ce que lesdites fibres s'étendent sensiblement normalement à ladite surface.

9. Procédé en continu selon la revendication 1 caractérisé en ce que ladite unité de frottement (40) est un revêtement de sabot de frein ayant une surface de frottement et en ce que lesdites fibres s'étendent sensiblement parallèlement à ladite surface.

10. Procédé en continu selon la revendication 1 caractérisé en ce que ladite unité de frottement (40) est un patin de frein ayant une surface de frottement et en ce que lesdites fibres (14) s'étendent selon un léger angle par rapport à ladite surface.

11. Procédé en continu selon la revendication 1 caractérisé en ce que lesdites fibres de renforcement sont prises dans le groupe constitué par le verre, la roche, la céramique, le carbone, le graphite, l'aramide et le NOMEX™.
